# EUROPÄISCHE PATENTSCHRIFT

(11) **EP 1 758 184 B1**
(45) Veröffentlichungstag und Bekanntmachung des Hinweises auf die Patenterteilung: **16.07.2014**
(21) Anmeldenummer: 06119330.6
(22) Anmeldetag: 22.08.2006
(51) Int. Cl.: H01M 10/052, H01M 2/16, H01M 10/0568, H01M 10/0569, H01M 10/058, H01M 6/16, H01M 6/18

(54) **Separator für Lithium-Polymer-Batterien und Verfahren zur Herstellung derselben**
Separator for lithium polymer batteries and method of manufacturing the same
Séparateur de batterie pour batterie lithium-polymère et procédé de fabrication associé

(30) Priorität: 23.08.2005 DE 102005039696
(43) Veröffentlichungstag der Anmeldung: 28.02.2007
(73) Patentinhaber: Dilo Trading AG, 6300 Zug (CH)
(72) Erfinder: Naarmann, Herbert, Dr., 67227 Frankenthal (DE)
(74) Vertreter: TBK

(56) Entgegenhaltungen:
- WO-A2-2004/042858
- WO-A2-2004/077588
- DE-A1- 10 143 889
- DE-A1- 10 328 572
- DE-B3- 10 343 535

## Beschreibung

Die Erfindung betrifft einen Separator für Lithium-Batterien und ein Verfahren zu dessen Herstellung, wobei der Separator die Fähigkeit aufweist ein Zusammenschmelzen zu verhindern, wenn die Batterie ungewöhnlich reagiert.

Der Separator ist eine poröse Keramik-Schicht auf Magnesiumoxid-Basis und umfasst Mikroporen zum Imprägnieren mit einem Elektrolyt. 50-80 Gew.-% des Magnesiumoxides können durch Calciumoxid, Bariumoxid, Magnesiumoxid, Calciumcarbonat, Bariumcarbonat, Lithiumphosphat, Natriumphosphat, Kaliumphosphat, Magnesiumphosphat, Calciumphosphat, Bariumphosphat oder durch Lithiumborat, Natriumborat, Kaliumborat ersetzt werden. In allen Fällen werden diese Materialien als Pulver mit einer Körnung von 5-40 µm, wasserfrei eingesetzt.

Im Handbook of Battery Materials edit. I. O. Besenhard, Wiley-VCH Verlag [1999] beschreiben W. Böhnstedt, p. 245-292 und R. Spotnitc, p. 553-563, die unterschiedlichen Separator-Typen. (Lit. 1)

Als Materialien werden Membranen aus Polypropylen, Polyethylen oder Kombinationen genannt. Eine Weiterentwicklung bzw. eine Parallelentwicklung sind Gel-Elektrolyt-Separatoren (Lit. 1, p. 557, hier werden PVDF/HFP- (Vinyliden Difluorid/Hexafluorpropylen) -Polymere gequollen in organischen Lösungsmitteln eingesetzt): - nachteilig ist die Erhöhung des Widerstandes z. B. um das Fünffache (Lit. 1, p. 557 [25]).

Andere Maßnahmen bestehen in der Kombination von Gel-Schichten mit mikroporösen Membranen (Lit.1, p. 557 [29], [30]) z.B. Celgard®.

DE 199 16 043 A1 beschreibt Verbundkörper, umfassend:
Aa) mindestens eine Separatorschicht Aa, die ein Mischung Ia, enthaltend ein Gemisch Iia, bestehend aus
   a) 1 bis 95 Gew.-% eines Feststoffs III, vorzugsweise eines basischen Feststoffs III, mit einer Primärpartikelgröße von 5 nm bis 20 µm und
   b) 5 bis 99 Gew.-% einer polymeren Masse IV, erhältlich durch Polymerisation von
      b1) 5 bis 100 Gew.-% bezogen auf die Masse IV eines Kondensationsprodukts V aus
         α) mindestens einer Verbindung VI, die in der Lage ist mit einer Carbonsäure oder einer Sulfonsäure oder einem Derivat oder einem Gemisch aus zwei oder mehr davon zu reagieren, und
         β) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon und
      b2) 0 bis 95 Gew.-% bezogen auf die Masse IV einer weiteren Verbindung VIII mit einem mittleren Molekulargewicht (Zahlenmittel) von mindestens 5000 mit Polyethersegmenten in Haupt- oder Seitenkette, wobei der Gewichtsanteil des Gemisches Iia an der Mischung Ia 1 bis 100 Gew.-% beträgt,
D. h. das beschriebene System besteht aus einer Kombination von einem Feststoff mit einem Polymerisat sowie weiteren Zusätzen.

Auch DE 100 41 630 A1 beschreibt einen Festelektrolyt-Separator für eine Hochtemperaturzelle, der nach Zugabe von Bindemittel gesintert wird.

DE 199 14 272 A1 beschreibt einen Separator auf Basis von Keramik mit Keramikfasern und Polyolefinen.

DE 100 41 629 A1 beschreibt einen Separator auf Basis von Aluminiumoxid, mit anderen Oxiden wie Na-, Li-, und/oder Mg-Oxid und einem thermoplastischen Bindemittel.

WO 01/82403 A1 beschreibt die Herstellung eines Polymerelektrolyt-Separators auf Basis von Copolymeren von Vinylidenfluorid und Hexafluorpropylen mit Füllstoffen durch Extrusion. In allen bekannten Fällen werden Kombinationen von keramischen Massen mit polymeren Bindemitteln verwendet; wobei die Polymeren z. T. vorgefertigt als mikroporöse Membranen (Lit. 1) vorliegen.

Das Mischen erfolgt unter Schutzgas bei Temperaturen von 0 bis 100° C, bei 40-100 Umdrehungen/min in einem Rührwerk (Dissolver) (entspr. Lit. 2, p.229-231, Basis of Coating Technology, edit. A. Goldschmidt, H.I. Streitberger, Vincentz Network, Hannover, 2003) unter Zusatz von aprotischen Lösungsmitteln wie Dimethoxiethan (DME), Alkylcarbonate wie Diethylcarbonat (DEC), Diisopropylcarbonat (DPC), Ethylencarbonat (EC), Propylencarbonat (PC) oder Perfluorbutylmethylether (Methoxynonafluorbutan MFB), Perfluorbutylethylether (Ethoxynonafluorbutan EFB) und Li-Salzen wie LiPF₆, Liorganoborate (LOB), Litrifluormethansulfonat (LiTFMS).

Typische Mischungen sind z.B.

| | **MgO*** | **MgCO₃** | **EC** | **PC** | **DPC** | **LiPF₆** | **LOB** | **LiTFMS** |
|---|---|---|---|---|---|---|---|---|
| I | 80 | 20 | 20 | 20 | 20 | 10 | - | - |
| II | 80 | 20LiBorat | 20 | 20 | 20 | 10 | - | - |
| III | 80 | 20Liphosphat | 20 | 20 | 20 | 10 | - | - |
| IV | 80 | 20Lioxid | 20 | 20 | 20 | 10 | - | - |
| V | 75 | 25MgCO₃ | 20 | 20 | 20 | 10 | - | - |
| VI | 60 | 40MgCO₃ | 20 | 20 | 20 | 10 | - | - |
| VII | 80 | 20MgCO₃ | 20 | 20 | 20 | - | 10 | - |
| VIII | 80 | 20MgCO₃ | 20 | 20 | 20 | - | - | 10 |
| IX | 80 | 20MgCO₃ | 20EFB | 20 | 20 | 10 | - | - |
| X | 80 | 20MgCO₃ | 20MFB | 20 | 20 | 10 | - | - |
| XI | 80 | 20MgCO₃ | 30 | 30 | 30 | 10 | - | - |
| XII | 80 | 20MgCO₃ | 20 | 30 | 30 | 10 | - | - |

| | | | | | | | | |
|---|---|---|---|---|---|---|---|---|
| *) Mengenangaben in Gewichtsteilen | | | | | | | | |

In allen Fällen I-XII liegen nach dem Vermischen streichfähige Pasten mit Viskositäten von SI Einheiten 5·10²-8·10³ Pas vor.

Die Viskositätsbestimmung erfolgt nach Hoppler "fallingball or rollingball" Lit. 2, p. 287.
Die erfindungsgemäßen Mischungen werden nach ihrer Herstellung im Mischer kontinuierlich ausgetragen und dienen zur Beschichtung von Anoden und Kathodenfolien.

Unter Anoden (Kathoden)- folien werden Laminate verstanden, bei denen z.B. auf eine Anoden-Ableiter-folie (Kupferfolie) vorzugsweise ohne Primer ein- oder beidseitig (Oberseite/Unterseite) Anodenmasse, d.h. eine Mischung aus Li-interkalierbarem natürlichem oder synthetischem Graphit mit Fluorterpolymeren (z.B. Dyneon 220®, 3M Comp.) als Bindemittel durch Extrusion aufgetragen wurde.

Analog: eine Kathodenfolie besteht aus einer Kathodenableiterfolie (Aluminiumfolie) ein- oder beidseitig mit Primer beschichtet, auf die durch Extrusion ein Li-interkalierbares Schwermetalloxid (LiCoOxid, LiNiOxid) oder ein Li-interkalierbares Fe-phosphat mit Fluorterpolymeren als Bindemittel aufgetragen wurde.

Die jeweiligen Ableiterfolien sind ca. 10 µm stark Die Primerschicht ist 1 bis 5 µm stark und besteht aus aufgedampftem Kohlenstoff oder aus leitfähigem Ruß (Graphit) mit Polymerbinder z.B. Dyneon 220® oder ä. und Ruß (Graphit), dessen Anteil im Primer 30-50 Gew.-% beträgt.

Die Anoden (Kathodenschichten) sind 20-50 µm stark Der Anteil des Li-interkarterbaren Graphits beträgt 85-95 Gew.-% in der Anodenmasse.
Der Anteil der Li-interkalierbaren Schwermetalloxide beträgt 85-92 Gew.-% in der Kathodenmasse.

Wesentliches Ziel dieser Erfindung ist es mit dem Polymerfreien Separator ein einfacheres Verfahren, im Hinblick auf einen kontinuierlichen Prozess, mit geringeren Energie- und Prozesskosten sowie umweltschonenden Bedingungen vorzustellen und parallel dazu die Sicherheitsbedingungen zu verbessern (vgl. Lit. 3 Lithium Ion Batteries edit. M. Wakihara, O. Yamamoto, Wiley VCH Verlag, New York, 1998, p. 83, 4.3 Safety) und zwar im Hinblick auf Überladung, Kurzschluss sowie "Nail penetration test".

Nach der Erfindung wird Magnesiumoxid mit einer Körnung von 5-40 µm mit Alkali- und/oder Erdalkalioxiden, -carbonaten, -phosphaten und/oder -boraten vermischt, wobei 50-80 Gew.-% dieser Mischung Magnesiumoxid ist.

Das Aufbringen der erfindungsgemäßen keramischen Schicht erfolgt durch Aufstreichen und zwar in Dicken von 20 bis 40 µm.

In WO 03/088 376 A2 (PCT/EP03/03933) wird ein Verfahren beschrieben zum Herstellen von Lithium-Polymer-Zellen aus mindestens einer als Folienband vorgefertigten Anoden- und Kathodenmasse.

Hierbei wird der Separator gemischt, extrudiert und als Folie in einer Dicke von 6-10 µm eingebracht, (vgl. Seite 11/12) anschließend mit Elektrolyt beaufschlagt.

Wesentlich für diese Erfindung ist jedoch, dass völlige Fehlen von Polymerbindern in den Separatormassen.

Bei Separatormischungen entspr. I-XII (Seite 4) werden keine Rußbildungen oder Versprödungen beobachtet. In allen Fällen lag eine homogene Separatormasse vor, selbst beim Wickeln - eines Trilaminates bestehend aus Anode, Kathode mit dem erfindungsgemäßen Durchmesser. Außerdem wurden Sicherheitsprobleme wie sie in EP 0750796, p. 3, beschrieben werden, durch Verwenden des erfindungsgemäßen Separators nicht beobachtet. Einzelheiten über Zusammensetzung und Herstellung werden in den Beispielen mitgeteilt.

### Beispiel: (Mengenangaben in Gewichtsteilen)

### Beispiele 1-12

Entsprechend der folgenden Tabelle I wurden Separatormischungen hergestellt

| ***Nr.*** | ***MgO*** | ***MgCo₃ od. ä.*** | ***EC*** | ***PC*** | ***DPC*** | ***LiPF₆*** | ***LOB*** | ***LiTFMS*** |
|---|---|---|---|---|---|---|---|---|
| 1 | 80 | 20 | 20 | 20 | 20 | 10 | - | - |
| 2 | 80 | 20 LiBorat | 20 | 20 | 20 | 10 | - | - |
| 3 | 80 | 20 Liphosphat | 20 | 20 | 20 | 10 | - | - |
| 4 | 80 | 20 Lioxid | 20 | 20 | 20 | 10 | - | - |
| 5 | 75 | 25 MgCO₃ | 20 | 20 | 20 | 10 | - | - |
| 6 | 60 | 40 MgCO₃ | 20 | 20 | 20 | 10 | - | - |
| 7 | 80 | 20 MgCO₃ | 20 | 20 | 20 | - | 10 | - |
| 8 | 80 | 20 MgCO₃ | 20 | 20 | 20 | - | - | 10 |
| 9 | 80 | 20 MgCO₃ | 20 EFB | 20 | 20 | 10 | - | - |
| 10 | 80 | 20 MgCO₃ | 20 MFB | 20 | 20 | 10 | - | - |
| 11 | 80 | 20 MgCO₃ | 30 | 30 | 30 | 10 | - | - |
| 12 | 80 | 20 MgCO₃ | 20 | 20 | 30 | 10 | - | - |
| 13 | Zement 80 | 20 MgCO₃ | 24 EFB | 20 | 20 | - | 10 | - |
| 14 | Zement 70 | 20 MgCO₃ | 20 | 20 | 20 | - | 10 | - |
| 15 | Zement 60 | 40 MgCO₃ | 20 EFB | 20 | 20 | - | 10 | - |
| 16 | Zement 50 | 50 MgCO₃ | 20 EFB | 20 | 20 | - | 10 | - |
| 17 | Zement 50 | 50 MgCO₃ | 20 | 20 | 20 | - | 10 | - |
| 18 | Liborat 50 | 50 MgCO₃ | 20 EFB | 20 | 20 | - | - | 10 |
| 19 | Liborat | 50 MgCO₃ | 20 | 20 | 20 | - | - | 10 |

Die verwendeten anorganischen Komponenten wurden vor dem Einsatz bei Temperaturen von 50-80° C im Vakuum entgast.
EC = Ethylencarbonat
PC = Propylencarbonat
DPC = Diisopropylcarbonat
MFB = Methoxynonafluorbutan
EFB = Ethoxynonafluorbutan
LiPF₆ = Li hexafluorophosphat
LOB = Li organo(oxalato)-borat
LiTEMS = Li trifluoromethansulfonat

Die in der Tabelle 1 angegebenen Komponenten Nr. 1-19 wurden jeweils bei Raumtemperatur unter Reinst N₂ (getrocknet, H₂O Anteil < 5 ppm) in einem Voith-Mischer 60 Minuten innig vermischt und die entstandene Paste mittels einer Breitschlitzdüse als 20-25 µm dicke Beschichtung kontinuierlich auf die beschichtete Seite einer Elektrode (Anode oder Kathode) aufgebracht; anschließend mit der anderen Elektrode abgedeckt, wobei die Beschichtungsseite auf die Separatorfolie gelegt wurde, hierdurch war zwischen die Elektroden die Separatormasse gebracht.
Durch anschließendes Laminieren und Wickeln lag ein Trilaminat vor, das nach den branchenüblichen Techniken eingehaust, gepolt und formiert wurde.
Als Anode diente MCMB® (OsakaGas) 91 %, mit 7 % Terpolymer Dyneon 220® (3M Comp.) sowie 2 % Lioxalatoborat, beschichtet auf eine 12 µm starke ungeprimerte Folie, die Schichtdicke der Anodenmasse betrug 22-26 µm.
Als Kathode diente LiNiₓCo₁₋ₓO₂ (H.C. Starck) 89 % mit 7 % Terpolymer Dyneon 220®, 2 % Lioxalatoborat und 2 % Fe₃O₄, beschichtet auf einer mit Dyneon THV 220 D/Ruß geprimerten Al-Folie, deren Dicke betrug 25-30 µm.
Anode und Kathode mit der Separatorzwischenlage wurden wie beschrieben zu einer Wickelzelle geformt.
Batterien und zum Vergleich mit einer Batterie gemäß dem Vergleichsbeispiel wurden folgende Parameter gewählt.
Kapazität: * 6 Ah
Obere Abschaltspannung: 4,2 V
Untere Abschaltspannung: 3,0 V
Maximalstrom: 6 A (entspr. 1 C Rate)
Cyclentest: Be- und Entladung wird mit einer 1 C Rate so lange durchgeführt, bis die Endkapazität 80 % erreicht ist. Die Zahl der Zyklen bis zum Erreichen von 80 % sind die" erreichten Cyclen"
Pulstest: 30-Sekunden-Takt mit 20 C Belastung
   * Batterietestgerät der Firma Digatron (Aachen)

Die Kapazität beträgt 32-34 mA/cm² und die Belastbarkeit bei 4 C bei einem Fading < 1,5 %.
Nail-Penetration Test (NP-Test).
Sämtliche Batterien mit den Separatoren 1 -19 bestehen den NP-Test.

### Vergleichsbatterie:

Anode und Kathode entsprechen den Beispielen 1 - 19 jedoch wurde als Separator Celgard 3025® mit 40 % Perforation und einer Dicke von 12 µm eingesetzt.
Diese Zelle zeigte ein Fading (bei 80 %) von ca. 3-4 %.
Der NP-Test wurde nicht bestanden, es erfolgte ein Kurzschluß.

Die Erfindung betrifft einen Separator für Lithium-Batterien und ein Verfahren zu dessen Herstellung, wobei der Separator die Fähigkeit aufweist ein Zusammenschmelzen zu verhindern, wenn die Batterie ungewöhnlich reagiert.

Der Separator ist eine poröse Keramik-Schicht auf Magnesiumoxid-Basis und umfasst Mikroporen zum Imprägnieren mit einem Elektrolyt. 50-80 Gew.-% des Magnesiumoxides können durch Calciumoxid, Bariumoxid, Magnesiumoxid, Calciumcarbonat, Bariumcarbonat, Lithiumphosphat, Natriumphosphat, Kaliumphosphat, Magnesiumphosphat, Calciumphosphat, Bariumphosphat oder durch Lithiumborat, Natriumborat, Kaliumborat ersetzt werden. In allen Fällen werden diese Materialien als Pulver mit einer Partikelgröße von 5-40 µm, wasserfrei eingesetzt.

## Patentansprüche

1. Separator für Lithium-Zellen, **dadurch gekennzeichnet, dass** der Separator polymerfrei ist und keramische Massen bestehend aus 50 - 80 Gew.-% Magnesiumoxid mit Partikelgrößen von 5 - 40 µm als separierende Phase zwischen Anode und Kathode eingesetzt werden,
die noch Alkali- und/oder Erdalkali-oxide, -carbonate, -phosphate, -borate in Mengen von 1 - 30 Gew.-%
und als Elektrolyt aprotische Lösungsmittel wie Alkyl-, Ethylen-, Propylen-, Diethyl- oder Dipropylcarbonaten für sich oder im Gemisch mit Leitsalzen wie LiPF₆, Liorganoboraten oder Li-Trifluorsulfonate oder Derivate enthalten und zwar als 0.5 bis 1 M Lösungen in Mengen von 10 - 35 Gew.-%.

2. Verfahren zum Herstellen von Lithium-Zellen aus mindestens einer vorgefertigten Anodenfolie und einer Kathodenfolie und einer separierenden dazwischenliegenden Zwischenphase (Separator), **dadurch gekennzeichnet, dass**
die Anode und Kathode sowie ein keramischer, polymerfreier Separator kontinuierlich und getrennt einer gekapselten Prozessoreinheit zugeführt werden,
die zusammengeführte Anode mit dem Separator und der Kathode zu einem Zellenverbund laminiert werden,
dieser Zellenverbund in einer zellenäquaten Form eingehaust, elektrisch kontaktiert, verschweißt sowie mit zugeführtem Verpackungsmaterial versehen wird, und die fertige Lithium-Polymer-Zelle aus der Prozessoreinheit ausgetragen wird.

3. Verfahren nach Anspruch 2, **dadurch gekennzeichnet, dass** die Anode und die Kathode mit dem Separator in der Prozessoreinheit über eine Walzen- und Wickelkombination zusammengeführt und zu einem Rundwickel-Zellenverbund gewickelt werden.

4. Verfahren nach Anspruch 3, **dadurch gekennzeichnet, dass** der Rundwickel-Zellenverbund bei 50 - 100°C und unter Druck hergestellt wird.

5. Verfahren nach einem der Ansprüche 2 bis 4, **dadurch gekennzeichnet, dass** das Verfahren in der Prozessoreinheit unter trockenem Inertgas, vorzugsweise Argon, durchgeführt wird.

6. Verfahren nach einem der Ansprüche 2 bis 5, **dadurch gekennzeichnet, dass** die Anode bzw. die Kathode als Ableiter-Folien, Netzen oder Carbonfasern, Kupfer für die Anode und Aluminium für die Kathode besteht und zwar vorzugsweise geprimert für die Aluminiumfolie des Kathodenableiters.

7. Verfahren nach einem der Ansprüche 2 bis 6, **dadurch gekennzeichnet, dass** der Separator zu 50 - 80 Gew.-% aus Magnesiumoxid mit Partikelgrößen von 5 - 40 µm besteht.

8. Verfahren nach Anspruch 7, **dadurch gekennzeichnet, dass** der Separator neben MgOxid, noch Alkali- und/oder Erdalkali-oxide, -carbonate, -phosphate, -borate in Mengen von 1 - 30 Gew.-% enthält.

9. Verfahren nach einem der vorhergehenden Patentansprüche, **dadurch gekennzeichnet, dass** der Separator als Elektrolyt aprotisches Lösungsmittel wie Alkyl-, Ethylen-, Propylen-, Diethyl- oder Dipropylcarbonaten für sich oder im Gemisch mit Leitsalzen wie LiPF₆, Liorganoboraten oder LiTrifluorsulfonate oder Derivate enthält und zwar als 0.5 bis 1 M Lösungen in Mengen von 10 - 35 Gew.-%.

10. Verfahren nach einem der Ansprüche 2 bis 9, **dadurch gekennzeichnet, dass** der Separator bei einer Temperatur zwischen 0 bis 100°C in einem Mischgerät hergestellt wird.

11. Verfahren nach einem der vorhergehenden Patentansprüche, **dadurch gekennzeichnet, dass** der Separator einen Elektrolyt enthält, der LiOrganoborate oder LiPF₆ als Leitsalze und Perfluoralkylether als Lösungsmittel enthält.

## Claims

1. A separator for lithium cells, **characterized in that** the separator is polymer-free and ceramic masses consisting of 50 to 80 wt.% of magnesium oxide having particle sizes of 5 to 40 µm are used as separating phase between anode and cathode,
which additionally contain alkali and/or alkaline earth oxides, carbonates, phosphates, borates in quantities of 1 to 30 wt.%
and, as electrolyte, aprotic solvents such as alkyl, ethylene, propylene, diethyl or dipropyl carbonates on their own or mixed with conducting salts such as LiPF₆, lithium organoborates or lithium trifluorosulfonates or derivatives, namely as 0.5 to 1 M solutions in quantities of 10 to 35 wt.%.

2. A method for manufacturing lithium cells of at least one prefabricated anode foil and a cathode foil and a separating intermediate phase in between (separator), **characterized in that**
the anode and the cathode as well as a ceramic, polymer-free separator are continuously and separately supplied to an encapsulated processor unit,
the joined anode is laminated with the separator and the cathode to form a cell compound,
said cell compound is encased in a cell equate form, is electrically contacted, welded and provided with supplied packaging material, and the finished lithium polymer cell is discharged from the processor unit.

3. The method according to claim 2, **characterized in that** the anode and the cathode are brought together with the separator in the processor unit via a roller and winder combination and are wound to form a round winding cell compound.

4. The method according to claim 3, **characterized in that** the round winding cell compound is manufactured at 50 to 100°C and under pressure.

5. The method according to any one of claims 2 to 4, **characterized in that** the method is carried out in the processor unit under dry inert gas, preferably argon.

6. The method according to any one of claims 2 to 5, **characterized in that** the anode and the cathode respectively consist of current-collector foils, nets or carbon fibers, copper for the anode and aluminum for the cathode, preferably primed for the aluminum foil of the cathode current collector.

7. The method according to any one of claims 2 to 6, **characterized in that** the separator consists of magnesium oxide having particle sizes of 5 to 40 µm in a quantity of 50 to 80 wt.%.

8. The method according to claim 7, **characterized in that** the separator does not only contain magnesium oxide, but also alkali and/or alkaline earth oxides, carbonates, phosphates, borates in quantities of 1 to 30 wt.%.

9. The method according to any one of the preceding claims, **characterized in that** the separator contains, as electrolyte, aprotic solvents such as alkyl, ethylene, propylene, diethyl or dipropyl carbonates on their own or mixed with conducting salts such as LiPF₆, lithium organoborates or lithium trifluorosulfonates or derivatives, namely as 0.5 to 1 M solutions in quantities of 10 to 35 wt.%.

10. The method according to any one of claims 2 to 9, **characterized in that** the separator is manufactured in a mixer at a temperature of between 0 and 100°C.

11. The method according to any one of the preceding claims, **characterized in that** the separator contains an electrolyte containing lithium organoborates or LiPF₆ as guiding salts and perfluoro alkyl ether as solvent.

## Revendications

1. Séparateur pour batteries au lithium, **caractérisé en ce que** le séparateur est dépourvu de polymère et **en ce que** des masses céramiques constituées de 50 à 80 % en poids d'oxyde de magnésium ayant des tailles de particules de 5 à 40 µm sont mises en oeuvre à titre de phase séparatrice entre l'anode et la cathode,
contenant en outre des oxydes, des carbonates, des phosphates, des borates alcalins et/ou alcalino-terreux en des quantités de 1 à 30 % en poids
et, comme électrolyte, des solvants aprotiques comme les carbonates d'alkyle, d'éthylène, de propylène, de diéthyle ou de dipropyle en soi ou en mélange avec des sels conducteurs comme LiPF₆, des organoborates de Li ou trifluorosulfonates de Li ou leurs dérivés, et ce sous forme de solutions ayant des concentrations de 0,5 à 1 M en des quantités de 10 à 35 % en poids.

2. Procédé de fabrication de batteries au lithium constituées d'au moins une anode en feuille préfabriquée et une cathode en feuille et une phase intermédiaire séparatrice intercalée entre les deux (séparateur), **caractérisé en ce que**
l'anode et la cathode ainsi qu'un séparateur en céramique dépourvu de polymères sont amenés en continu et séparément à une unité de traitement close,
l'anode amenée conjointement avec le séparateur et la cathode sont stratifiées pour former un composite de batterie,
ce composite de batterie est logé dans une forme adéquate pour une batterie, mis en contact électrique, soudé et doté du matériau de conditionnement amené, et la batterie de lithium - polymère finie est extraite de l'unité de traitement.

3. Procédé selon la revendication 2, **caractérisé en ce que** l'anode et la cathode sont amenées conjointement avec le séparateur dans l'unité de traitement par le biais d'une combinaison de rouleaux et de bobine et sont enroulées pour donner un composite de batterie en bobine.

4. Procédé selon la revendication 3, **caractérisé en ce que** le composite de batterie en bobine est fabriqué à une température de 50 à 100°C et sous pression.

5. Procédé selon une des revendications 2 à 4, **caractérisé en ce que** le procédé est réalisé dans l'unité de traitement sous gaz inerte sec, de préférence sous argon.

6. Procédé selon une des revendications 2 à 5, **caractérisé en ce que** l'anode et/ou la cathode en tant que feuilles collectrices, réseaux ou fibres de carbone se composent de cuivre pour l'anode et d'aluminium pour la cathode, et de préférence enduit d'un primaire pour la feuille en aluminium du collecteur cathodique.

7. Procédé selon une des revendications 2 à 6, **caractérisé en ce que** le séparateur se compose à 50 à 80 % en poids d'oxyde de magnésium ayant des tailles de particules de 5 à 40 µm.

8. Procédé selon la revendication 7, **caractérisé en ce que** le séparateur contient, en plus de l'oxyde de Mg, en outre des oxydes, des carbonates, des phosphates, des borates alcalins et/ou alcalino-terreux en des quantités de 1 à 30 % en poids.

9. Procédé selon une des revendications précédentes, **caractérisé en ce que** le séparateur contient, comme électrolyte, un solvant aprotique comme les carbonates d'alkyle, d'éthylène, de propylène, de diéthyle ou de dipropyle en soi ou en mélange avec des sels conducteurs comme LiPF₆, des organoborates de Li ou trifluorosulfonates de Li ou leurs dérivés, et ce sous forme de solutions ayant des concentrations de 0,5 à 1 M en des quantités de 10 à 35 % en poids.

10. Procédé selon une des revendications 2 à 9, **caractérisé en ce que** le séparateur est fabriqué à une température située entre 0 et 100°C dans un appareil de mélange.

11. Procédé selon une des revendications précédentes, **caractérisé en ce que** le séparateur contient un électrolyte comprenant des organoborates de Li ou LiPF₆ comme sels conducteurs et du perfluoroalkyléther comme solvant.
